(19)

Europäisches
Patentamt
European
Patent Office
Office européen
des brevets

(11) **EP 2 706 815 A1**

(12) **EUROPEAN PATENT APPLICATION**

(43) Date of publication:
**12.03.2014 Bulletin 2014/11**

(51) Int Cl.:
***H04W 88/04*** (2009.01)

(21) Application number: **12306082.4**

(22) Date of filing: **07.09.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **NEC Corporation, Incorporated in
Japan
Tokyo 108-8001 (JP)**

(72) Inventors:
• **Panaitopol, Dorin
92130 Issy Les Moulineaux (FR)**
• **Delsol, Thomas
91360 Epinay Sur Orge (FR)**

(74) Representative: **Cabinet Plasseraud
52, rue de la Victoire
75440 Paris Cedex 09 (FR)**

(54) **Method and system for relaying in a telecommunication network**

(57)     The present invention relates to a method for relaying in a telecommunication network (NW) a transmission between a base station (BS) and a first user equipment (UE1) through at least one second user equipment (UE2-R, UE3-R), said method comprising the step of estimating (S1) a position $(P2_{(x2, y2)})$ of the first user equipment (UE1), and the step of computing (S2), for the first user equipment (UE1) and on the basis of the estimated position $(P2_{(x2, y2)})$, a list (L) of at least one second user equipment having means (UE2-R, UE3-R) for relaying the transmission between the first user equipment (UE1) and the base station (BS).

## FIG. 1

**Description**

Technical field

The present invention relates to telecommunication networks, and more particularly to relaying in telecommunication networks, such as 3GPP LTE networks.

More particularly still, the present invention relates to a method and a system for relaying a transmission, such as for example a downlink and/or uplink transmission of data, between a base station and at least one user equipment.

Technical background

In a telecommunication network, such as a 3GPP LTE network, one of the roles of the base station is to transmit communication data and/or signalling data from the core network to user equipments (UEs) which are under its radio cell coverage.

Furthermore, in such a telecommunication network, the user equipments also need to transmit signalling data to the base station whenever a communication is required (e.g. to register, update registration, establish a data session or a voice call, etc.).

These two types of transmission between the base station and the user equipment in a downlink direction and/or in an uplink direction are called hereafter a transmission between the base station and the user equipment.

Due to a variety of factors (e.g. environment, path loss, power limitation, interferences, traffic, etc.), the cell coverage may sometimes be limited or there may be some regions where the signals from the station base cannot be correctly received by the user equipments. Similarly, the coverage may sometimes be limited or there may be some regions where the signals from user equipment cannot be correctly received by the base station.

This requires relaying the transmission between the base station and the user equipments. Classically, such relaying involves the use of Relay Nodes to transmit the signals between the base station and the user equipments, instead of a direct transmission between the base station and the user equipments.

Today, at least four situations have been identified in which relaying is required:

Relaying is necessary in order to improve communication for the user equipments which are near the edge of a cell, under coverage gaps (out-of-coverage), or are suffering from a high level of interferences. This is also the case when a network operator searches for extending the coverage of a cell.

Relaying can also be used to decrease the power consumption of the user equipments in an uplink transmission.

Relaying can be used to decrease total intra-cell and inter-cell interferences.

Relaying can further be used as an offloading alternative.

Thus, the 3GPP group introduces Relay Nodes, which can be fixed or mobile, in order to deal with radio cell coverage gaps.

Thanks to such Relay Nodes, instead of having a direct transmission from the user equipments to the base station, the data pass through at least one Relay Node before reaching the target base station. Correlatively, for the transmission from the base station to the user equipments, the data pass through the Relay Node before reaching the user equipments.

Nevertheless, Relay Nodes, which can be for example base stations, are expensive.

Moreover, fixed Relay Nodes are not efficient in certain areas such as, for example, in a tunnel, under a bridge, or inside indoor parking garages.

Furthermore, the installation of some Relay Nodes involves additional electromagnetic exposure for individuals.

The use of femtocells or WLANs to overcome these drawbacks is not typically adequate, notably because user equipments are continuously moving in the telecommunication network and femtocells and WLANs, thus resulting in inadequate handovers.

Documents S1-113135 and S1-113143 in 3GPP standard propose the deployment of proximity services using a user equipment as a relaying entity.

Nevertheless, no technical solution in those documents has been proposed and implemented to trigger efficiently the relaying using a user equipment as a relaying entity.

Summary

The present invention aims to provide an alternative to the use of Relay Nodes so as to overcome the drawbacks raised above and to improve the cell coverage or the network with an offloading alternative.

In a first aspect, the present invention provides a method for relaying in a telecommunication network a transmission between a base station and one or several first user equipments through at least one second user equipment.

A user equipment within the present invention can be any device used by an end user to communicate including portable telephones, laptops, and networked appliances or other devices capable of Machine Type Communication (MTC), also known as Machine to Machine (M2M) communication.

As mentioned above, in exemplary embodiments, such transmission can be a downlink and/or uplink transmission of data, such as, for example, communication data and/or signalling data.

According to the first aspect, the method comprises a step of estimating a position of the first user equipment.

The method further comprises a step of computing, for the first user equipment and on the basis of the estimated position, a list of at least one second user equipment having means for relaying the transmission between the first user equipment and the base station.

Thus, by computing such a list of at least one second user equipment having relaying means in the telecommunication network on the basis of the estimated position of the first user equipment, it is possible to relay the transmission between a base station and a first user equipment, without using classical Relay Nodes.

This solution is better for the first user equipment in terms of power consumption, compared to the use of Relay Nodes.

Such succession of steps within the present invention in which the transmission between a base station and a first user equipment is relayed through at least one second user equipment having relaying means is particularly useful:

- when a given base station does not properly cover a given area (e.g. there is a coverage gap) and the first user equipment is in a coverage gap or out-of-coverage, and/or
- when the operator seeks to extend the coverage of a cell, and/or
- to improve communication capabilities with the user equipment.

The above method does not involve a complex and expensive installation of Relay Nodes in the telecommunication network, as are necessary in the prior art.

Furthermore, the computation of a list of second user equipments having relaying means permits to determine the most appropriate second user equipment, also called the "best" second user equipment (hereafter in the detailed description), that is available in the telecommunication network on the basis of the position of the first user equipment.

In an exemplary embodiment, the list may also include other relaying means than user equipments such as for example Relay Nodes (fixed or mobile), femtocells or WLANs.

In an exemplary embodiment, the method further comprises a step of establishing a direct radiofrequency link between the first user equipment and at least one second user equipment of the list. Such a direct radiofrequency link can be a bidirectional radiofrequency link.

In an exemplary embodiment, the step of establishing a direct radiofrequency link between the first user equipment and at least one second user equipment of the list may comprise LTE radio access technology or a different radio access technology (e.g. WiFi, WiMAX, AM, FM, etc.).

In an exemplary embodiment, the steps of estimating the position and computing the list are periodically performed, preferably at a period depending on a speed of the first user equipment.

This permits to have an updated list of the second user equipments in the telecommunication network that takes into account the position of the first user equipment: if the speed of the first user equipment is high, the update of the list has to be more frequent.

The present invention proposes different approaches to estimate the position of the first user equipment.

In one exemplary embodiment, the method can use the determination of at least two previous positions of the first user equipment in order to estimate the position of the first user equipment.

In other terms, the position of the first user equipment is estimated for a predetermined time on the basis of at least two positions of the first user equipment at respective times, these respective times being prior to the predetermined time.

If the direction of the first user equipment is assumed to be constant, then a future position of the first user equipment can be estimated.

Alternatively, it is also possible to estimate the position of the first user equipment when its direction is not constant. In this case, a trajectory of the first user equipment can be determined for example on the basis of the at least two positions and a road map.

In this case, several previous positions matching with a road on a road map can determine the first user equipment as to be on said road, for example in a vehicle. The mean speed of the first user equipment can be calculated on the basis of the at least two positions.

It is therefore possible to estimate a next future position of the first user equipment on the basis of the mean speed and the estimated trajectory of the first user equipment, even if its direction is not constant.

Alternatively, the position of the first user equipment can be estimated for a predetermined time on the basis of:

- at least one position of said first user equipment at a time prior to the predetermined time,

- a speed of the first user equipment, and
- a direction of the first user equipment.

This alternative embodiment can be advantageous, notably when for example the first user equipment is in a train for example (having thus a constant trajectory or approximately a constant trajectory), or when for example the holder of the first user equipment does not move, or moves very slowly (with a speed below a predetermined speed threshold for example).

Advantageously, the position is estimated by sending, from the base station to a serving mobile location centre, a request to obtain the position of the first user equipment at said respective times, and by receiving, at the base station and from the serving mobile location centre, a response to this request. Such response comprises the position.

In exemplary embodiments, the method can also comprise estimating the speed and/or the direction of the first user equipment.

Advantageously, the method further comprises the step of determining whether the estimated position is in a predetermined area. Indeed, the relaying through the second user equipment is preferably performed when the first user equipment is bound to enter in the predetermined area.

In exemplary embodiments, upon positive determination (that is to say if the estimated position is determined as to be in a predetermined area, or, in other words, if the first user equipment is bound to enter in the predetermined area), the method further comprises the step of sending from the base station to the first user equipment a reconfiguration message including the list.

In exemplary embodiments, the step of determining whether the estimated position of the first user equipment is in the predetermined area comprises determining whether a distance between the estimated position and the predetermined area is equal to or less than a predetermined distance threshold. In other terms, the step of determining whether the estimated position of the first user equipment is in the predetermined area comprises determining whether the distance between the estimated position and at least one point of the predetermined area is substantially equal to or less than a predetermined distance threshold.

Advantageously, the predetermined distance threshold depends on the speed of the first user equipment. In one embodiment of the invention, the predetermined distance threshold is set such that the base station has sufficient time to handle the whole process and to configure the user equipments so as to initiate the transmission with the first user equipment through at least one of the second user equipments of the list.

In exemplary embodiments, if the required time is equal to 500 milliseconds, and if for example the speed of the first user equipment is 60 kilometres per hour, then the predetermined distance threshold will be substantially equal to 8,33 metres, which is still less than a distance corresponding to a quick loss of coverage such as for example in a tunnel entrance.

In other exemplary embodiments, the step of determining whether the estimated position of the first user equipment is in the predetermined area comprises determining whether the distance between the estimated position and a previous position of the first user equipment is substantially equal to or greater than the distance between said previous position and a predetermined point of the predetermined area.

Thus, in exemplary embodiments, a reconfiguration message including the list is sent upon a positive determination from the base station to the first user equipment.

The first user equipment can directly perform radiofrequency measurements relatively to each second user equipment of the list. Then, the first user equipment sends to the base station a measure report comprising the results of these measurements.

Preferably, the measurements and/or the sending of the measurement report are periodically performed with a chosen period so as to reduce the power consumption of the first user equipment. For example, the period can be a function of the estimated speed of the first user equipment (the higher the speed is estimated and the lower the period is chosen).

In exemplary embodiments, the method further comprises the step of receiving, at the base station and from the first user equipment, a measurement report related to the second user equipments of the list.

Advantageously, the method further comprises the step of selecting one second user equipment of the list upon the measurement report. Such selection is performed according to criteria such as the ones hereafter.

Advantageously, the list can thus be computed so as to determine at least one second user equipment fulfilling at least one criterion based on:

- an assumed energy and/or power to be consumed by first and/or second user equipments, and/or
- a distance or channel propagation attenuation between the first user equipment and the second user equipment, and/or between the second user equipment and the base station, and/or
- an harmonic mean of a distance or channel propagation attenuation between the first and second user equipments, and between the second user equipment and the base station, and/or

- a quality of service of the first and/or second user equipments.

In exemplary embodiments, the list further comprises dedicated information including for example a position of pilots in a time-frequency grid, frequency and time resources used by the second user equipment. This allows compliance with the standards of signalling according to the 3GPP standard.

Correlatively, the present invention relates to a computer program comprising code instructions implementing the method described above when it is executed by a processor.

The present invention also relates to a system that is arranged for implementing the steps of the method as described above.

More particularly, the present invention relates to a system for determining means for relaying a transmission in a telecommunication network between a base station and a first user equipment.

In exemplary embodiments, the system comprises a processing unit arranged to :

- estimate a position of the first user equipment, and
- compute, for the first user equipment and on the basis of the estimated position, a list of at least one second user equipment having means for relaying the transmission between the first user equipment and the base station.

Advantageously, the processing unit is arranged to establish a direct radiofrequency link between the first user equipment and one second user equipment of the list that is selected in the list according to one or several predetermined criteria given above for example (or hereafter in the detailed description).

In exemplary embodiments, the processing unit is arranged such as the estimation of the position and the computation of the list are periodically performed, preferably at a period depending on a speed of the first user equipment.

Correlatively, the present invention relates to a base station of a telecommunication network comprising a system as described above.

The present invention also relates to a core network of a telecommunication network that is arranged for implementing the method described above.

For example, the core network comprises a server arranged to:

- estimate a position of the first user equipment, and
- compute, for the first user equipment and on the basis of the estimated position, a list of at least one second user equipment having means for relaying the transmission between the first user equipment and the base station.

Then, the server is arranged to send the list to the base station, and upon the list, the base station is arranged to establish a direct radiofrequency link between the first user equipment and one second user equipment of the list.

The implementation of the present invention in a core network is particularly useful for reducing the power consumption and the computer resources of the base station.

The present invention can also relate to a first user equipment comprising a system as described above. This embodiment can be useful notably when the first user equipment is no longer covered by a base station and has to find a relay node by its own means.

Therefore, in the case the first user equipment is in an out of coverage area, then the first user equipment comprising the system according to the present invention estimates its position (based for example on previous position (s)), and computes an updated list of potential second user equipments having relaying means (based for example on previous list(s)), so as to relay the transmission between the base station and at least one second user equipment of the updated list.

For example, the first user equipment UE1 is in an out of coverage area Z: the new estimated position can be determined on the basis of the two previously estimated positions and the new list can be computed on the basis of the two previously lists and the newly estimated position.

Brief description of the figures

The accompanying figures, which are included to provide a further understanding of the invention and are incorporated in and constitute a part of this specification, illustrate exemplary embodiments of the invention, and together with the description serve to explain the principles of the invention.

Figure 1 illustrates a block diagram of a first exemplary telecommunication network in which a base station includes a system for relaying according an exemplary embodiment of the present invention.

Figure 2 illustrates a block diagram of a second exemplary telecommunication network in which a core network includes a system for relaying according an exemplary embodiment of the present invention.

Figure 3 illustrates a block diagram of an exemplary system for relaying according to an exemplary embodiment of the present invention.

Figure 4 illustrates a flowchart representing the different steps of the method according to one embodiment of the present invention.

Figure 5 illustrates a message exchange chart according to one embodiment of the present invention.

Detailed description

The invention is described more fully hereinafter with reference to the accompanying figures, in which exemplary embodiments of the invention are shown.

This invention may, however, be embodied in many different forms and should not be construed as limited to the embodiments set forth herein. Rather, these exemplary embodiments are provided so that this disclosure is thorough, and will fully convey the scope of the invention to those skilled in the art.

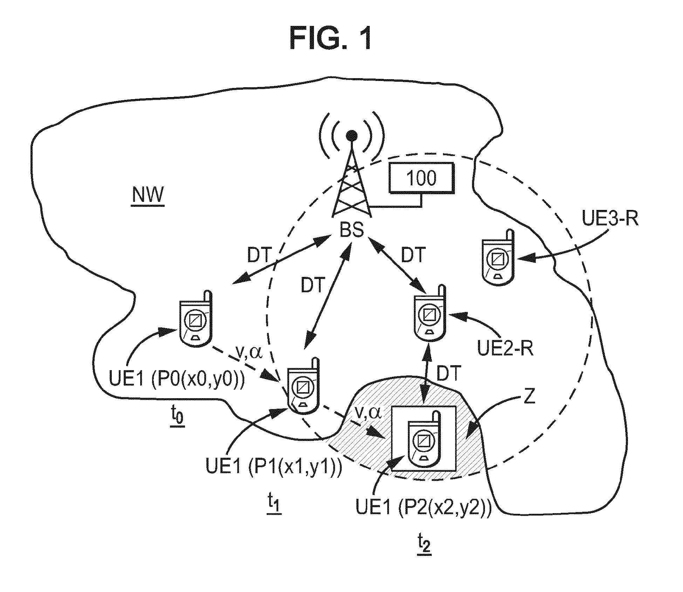

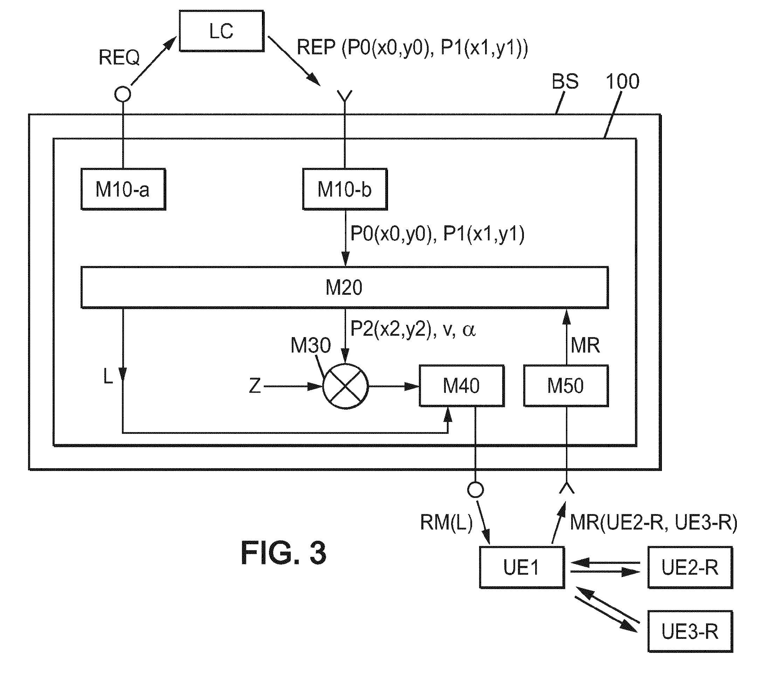

Figure 3 shows a system 100 for relaying in a telecommunication network NW an uplink and downlink transmission of data, referenced DT in figure 1, between a first user equipment UE1 and a base station BS including for example an e-NodeB (for evolved NodeB), through one or several relaying means.

In this exemplary embodiment, the telecommunication network NW is a telecommunication network according to the 3GPP standard. Furthermore, as mentioned above, the data within the present invention can be for example communication data and/or signalling data.

Figures 1 illustrates a first embodiment of the present invention in which the system 100 is included in a base station BS.

As illustrated in figure 1, the system 100 permits to relay the transmission between the user equipment UE1 and the base station BS through one second user equipment having relaying means UE2-R. A person skilled in the art will readily recognize from this example that several second user equipments having relaying means could be used.

As mentioned above, the user equipment within the present invention can be any device used by an end user to communicate including portable telephones, laptops, and networked appliances or other devices capable of Machine Type Communication (MTC), also known as Machine to Machine (M2M) communication. Some means for relaying a transmission between a first user equipment and a base station or another user equipment are integrated in the second user equipment.

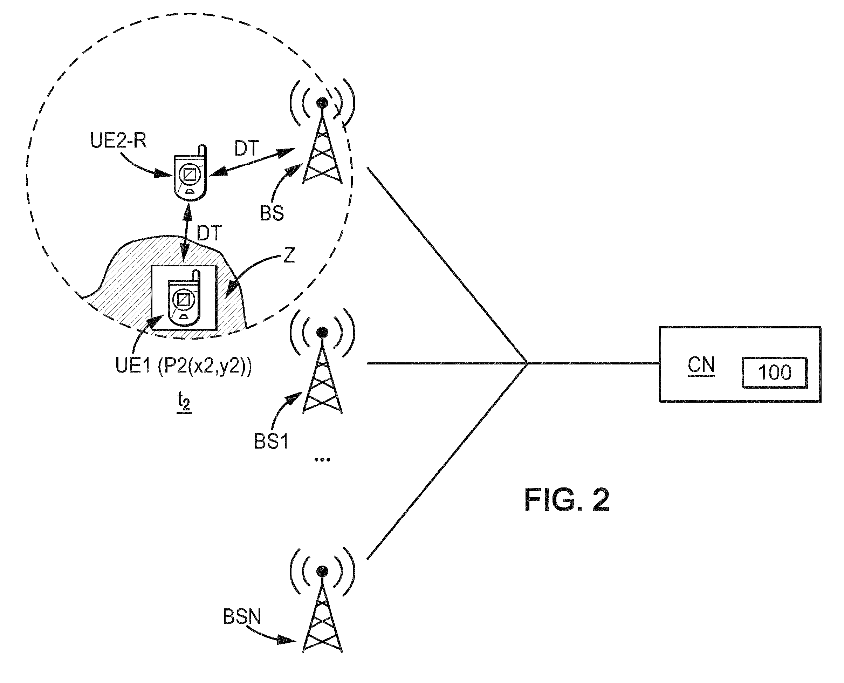

Figure 2 illustrates a second embodiment of the present invention in which the system 100 is included in a core network CN of a telecommunication network NW. In this embodiment, several base stations BS, BS1 to BSN can be connected to the core network CN.

In this second embodiment, the system 100 can be integrated in a server (not illustrated here).

This embodiment is particularly useful for reducing the power consumption and the computer resources of the base station BS. As mentioned above, in this second embodiment, the server of the core network CN comprises computer means for providing to the base station BS a list L of second user equipments so as to establish a radiofrequency link between the first user equipment UE1 and one second user equipment of the list L.

In this second embodiment, the server of the core network CN computes the list L on the basis of an estimation of the position of the first user equipment UE1.

In a third embodiment, it is also possible to conceive a first user equipment comprising the system 100 so as to relay said transmission through one or several second user equipments having relaying means (not illustrated). As mentioned above, this third embodiment can be useful notably when the first user equipment is no longer covered by a base station and has to find a relay node by its own means. The present detailed description below focuses on the first embodiment of the present invention (illustrated in figure 1). The man skilled in the art will readily recognize that the technical teaching of this detailed description can be transposed to the second or third embodiment aforementioned.

Firstly, it has to be assumed that, in figure 1, the base station BS does not properly cover the area Z, because of:

- the natural environment, for example: mountains, tunnel, indoor environment, etc., or
- a network malfunction, or
- high interferences and/or traffic.

Such area Z, which is an "out of coverage" area, can be identified and well-known by the base station BS, notably for example by using CQI (Channel Quality Indication), MDT (Minimization of Drive Tests), RSRP (Reference Signal Receive Power), RSRQ (Reference Signal Receive Quality), or equivalent methods.

The localization of this area Z can be stored in a storage medium or a data map.

Thus, the present invention aims at enabling relaying when the first user equipment UE1 is bound to enter in the predetermined area Z or is in the vicinity of such area Z.

Nevertheless, for a given first user equipment UE1, it is difficult to determine when to start relaying and which is(are) the "best" second user equipment(s) having relaying means in the telecommunication network NW to proceed to relaying.

A "best" second user equipment within the present invention is a user equipment that would fulfil some predetermined criteria, such as for example the minimization of the power/energy consumptions, the maximization of the quality of service (QoS), the minimization of the distance between the second user equipment and the base station, or between the first user equipment and the second user equipment.

The speed or the direction can also be used to determine that "best" second user equipment.

In exemplary embodiments, the determination of the "best" second user equipment can also take into account a combination of the different criteria listed above: for example, a weighting of the consumption or quality of service and the distance, or a correlation between the consumption or quality of service and the distance.

In this exemplary embodiment, and as illustrated in figure 1, the present invention therefore provides all the mechanisms for efficiently relaying the transmission of data, referenced DT, between a first user equipment UE1 and the base station BS through one second user equipment UE2-R, when the first user equipment UE1 is bound to enter in the area Z.

Thus, in this exemplary embodiment, and as illustrated in figure 1, the base station BS within the present invention comprises a system 100 that is specifically arranged to assist the first user equipment UE1, in a mobility situation, in order to determine one or several second user equipments UE2-R and UE3-R having relaying means in the telecommunication network NW, and to trigger relaying through the "best" second user equipment.

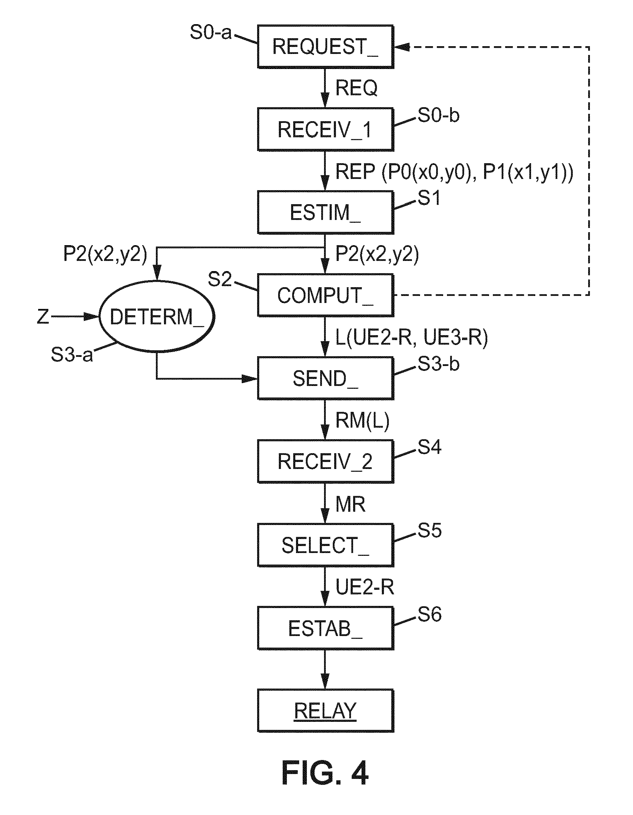

One of the mechanisms to determine such a "best" second user equipment UE2-R and/or UE3-R is the estimation, during the step S1 of figure 4, of at least one position $P2_{(x2, y2)}$ of the first user equipment UE1 at a predetermined time t2.

This estimation is periodically performed by a processing unit M20.

In this exemplary embodiment, and as illustrated in figure 1, this processing unit M20 is specifically arranged to periodically estimate the position $P2_{(x2, y2)}$ of the first user equipment UE1 for a predetermined time t2 on the basis of at least two determined positions $P0_{(x0, y0)}$ and $P1_{(x1, y1)}$ at respective times t0 and t1, these respective times t0 and t1 being prior to said predetermined time t2.

This position $P2_{(x2, y2)}$ of the first user equipment UE1 is a future position of the first user equipment UE1 on its trajectory.

The man skilled in the art will readily recognize from figure 1 that:

- $P0_{(x0, y0)}$ and $P1_{(x1, y1)}$ are the positions of the first user equipment UE1 at respectively time t0 and t1,
- $P2_{(x2, y2)}$ is the estimated position of the first user equipment UE1 on its trajectory at a predetermined time t2 (times t0 and t1 are prior to time t2), and
- $(x0, y0)$, $(x1, y1)$ and $(x2, y2)$ are the coordinates of the positions of first user equipment UE1 at times t0, t1, and t2, respectively.

The man skilled in the art will readily recognize from this 2D example that the present exemplary embodiment can also be implemented in 3D.

Assuming that the first user equipment UE1 has a substantially constant speed v and a substantially constant direction $\alpha$, the position $P2_{(x2, y2)}$ can be determined quite accurately (this assumption is reasonable for example when the first user equipment UE1 is in a train or in a car on a highway).

As the speed v is assumed to be constant between instants t0 and t1, and between instants t1 and t2, then the following first equation (1) is obtained:

$$(1): v = \frac{\sqrt{(x1 - x0)^2 + (y1 - y0)^2}}{(t1 - t0)} = \frac{\sqrt{(x2 - x1)^2 + (y2 - y1)^2}}{(t2 - t1)}$$

Moreover, as the direction $\alpha$ is assumed to be constant between instants t0 and t1, and between instants t1 and t2, then the following second equation (2) is obtained:

$$(2): \frac{1}{\tan(\alpha)} = \frac{(x1 - x0)}{(y1 - y0)} = \frac{(x2 - x1)}{(y2 - y1)}$$

Those two equations (1) and (2) have the same two unknown variables $x2$ and $y2$. Then, the two equations (1) and (2) can be solved by the processing unit M20 to obtain the coordinates ($x2$, $y2$) of the position $P2_{(x2, y2)}$.

In this exemplary embodiment, the positions $P0_{(x0, y0)}$ and $P1_{(x1, y1)}$ are determined as follows.

As illustrated in figure 3, the system 100 comprises a first transmitter M10-a that sends, during the step S0-a of figure 4, to a serving mobile location centre LC, such as an E-SMLC, a request REQ to obtain the positions $P0_{(x0, y0)}$ and $P1_{(x1, y1)}$ of the first user equipment UE1 at instants t0 and t1, respectively.

Then, the system 100 comprises a first receiver M10-b that receives, during the step S0-b of figure 4, from the serving mobile location centre LC a response REP to the request REQ. Such response REP includes the two requested positions $P0_{(x0, y0)}$ and $P1_{(x1, y1)}$.

Other methods to determine the positions $P0_{(x0, y0)}$ and $P1_{(x1, y1)}$ of the first user equipment UE1 at instants t0 and t1 can also be implemented within the present invention.

Furthermore, other approaches to estimate the position $P2_{(x2, y2)}$ of the first user equipment UE1 can be implemented within the present invention.

For example, the position $P2_{(x2, y2)}$ of the first user equipment UE1 can be estimated for a predetermined time t2 on the basis of one position $P0_{(x0, y0)}$ or $P1_{(x1, y1)}$ of the first user equipment UE1 at a time t0 or t1 (prior to the predetermined time t2), and on the basis of an estimated speed v and an estimated direction $\alpha$ of the first user equipment UE1.

This exemplary embodiment is particularly advantageous when the first user equipment UE1 is in a vehicle having a known and approximately constant speed (a train for example).

The speed v and the direction $\alpha$ of the first user equipment UE1 can also be provided by the serving mobile location centre LC.

Knowing the position $P2_{(x2, y2)}$ of the first user equipment UE1, another step of the mechanism to determine the "best" second user equipment UE2-R and/or UE3-R is the computation, during the step S2 of figure 4, of a list L of potential second user equipment(s) having relaying means in the telecommunication network NW.

This is performed by the processing unit M20 that periodically computes such list L on the basis of the estimated position $P2_{(x2, y2)}$.

Preferably, the steps of estimation S1 and computation S2 are performed periodically at a period that depends on the speed v of the first user equipment UE1.

The fact that the period depends on the speed v permits to have an updated list L according to the estimated position $P2_{(x2, y2)}$ of the first user equipment UE1: for example, if the holder of the first user equipment UE1 drives very fast on a highway, then this list L has to be updated very regularly.

As illustrated in figure 1, in this exemplary embodiment, there are only two second user equipments having relaying means UE2-R and UE3-R, but of course more than two second user equipments having relaying means can be located in the telecommunication network NW.

Therefore, in this exemplary embodiment, the list L comprises the second user equipment UE2-R and UE3-R.

As mentioned above, the list L can also comprise other relaying means (not illustrated) than user equipments such as for example Relay Nodes (fixed or mobile), femtocells or WLANs.

In this exemplary embodiment, the processing unit M20 can be a processor, a microcontroller, or a set of processors associated with a memory storing a software or a computer program comprising code instructions implementing notably the step of estimating S1 and the step of computing S2 the list L when it is executed by the processor.

Such processing unit M20 can be composed by one or several chips. The processor may include at least one conventional processor or microprocessor that interprets and executes code instructions.

The memory may be a random access memory (RAM) or another type of dynamic storage device that stores information and instructions for execution by the processor. The memory may also store temporary variables or other intermediate information used during execution of instructions by the processor. The ROM may include a conventional ROM device or another type of static storage device that stores static information and instructions for processor. The storage device may include any type of media, such as, for example, magnetic or optical recording media and its corresponding drive.

One of the objectives of the present invention is to determine when to efficiently trigger the relaying.

As illustrated in figure 3, the localization circuit M30 of the system 100 determines, during the step S3-a of figure 1, whether the distance between the estimated future position $P2_{(x2, y2)}$ and a predetermined point of the predetermined area Z is substantially equal to or less than a predetermined distance threshold.

If the result of that determination is positive, the estimated position $P2_{(x2, y2)}$ of the first user equipment UE1 is determined as to be in the area Z, or in the vicinity of the area Z: this means that the first user equipment UE1 is bound to enter in an out-of-coverage area Z.

Advantageously, several distances between the estimated future position $P2_{(x2, y2)}$ and several predetermined points of the predetermined area Z can be calculated. In this case, if only one calculated distance is equal to or less than a predetermined distance threshold, then the first user equipment UE1 is determined to enter in the area Z.

The predetermined distance threshold can be calculated by the localization circuit M30 on the basis of the speed v of the first user equipment UE1 between times t0 and t1.

As mentioned above, if for example the total time to handle the whole process and to initiate the relaying is equal to 500 milliseconds, and if for example the speed v of the first user equipment UE1 is 60 kilometres per hour, then the predetermined distance threshold will be around 8,33 metres.

Thus, the speed v allows the determination of a minimum distance (the distance threshold) that the user equipment UE1 would travel in a determined period before reaching the area Z.

In this example, the localization circuit M30 can determine on the basis of the estimated position $P2_{(x2, y2)}$ whether the first user equipment UE1 is bound to enter in the area Z.

As mentioned above, assisting the base station BS in the choice of the "best" second user equipment(s) having relaying means is one of the objectives of the present invention.

As illustrated in figure 3, the system 100 comprises a first transmitter M40 that, upon a positive determination (that is to say if the position $P2_{(x2, y2)}$ of the first user equipment UE1 is determined as to be in the out of coverage area Z), sends, during the step S3-b of figure 4, to the first user equipment UE1 a reconfiguration message RM including the list L.

Some measurements are performed directly by the first user equipment UE1 before each second user equipment UE2-R and UE3-R of the list L. Alternatively, these measurements can also be performed by the base station BS.

These measurements can be for example:

- the assumed energy and/or power to be consumed per first UE1 and/or second UE2-R and/or UE3-R user equipment (s), and/or
- the local quality of service of the first UE1, and/or second UE2-R and/or UE3-R user equipment(s), and/or
- the global quality of service of the set comprising the first user equipment UE1
- a second user equipment UE2-R or UE3-R - and the base station BS, and/or
- the distance or the channel propagation attenuation between the first user equipment UE1 and the second user equipment UE2-R or UE3-R, or the distance between the second user equipment UE2-R or UE3-R and the base station BS.

These measurements are provided to the system 100 to decide which one(s) is(are) the "best" second user equipment(s) UE2-R and/or UE3-R of the list L.

Thus, the first user equipment UE1 periodically sends to the system 100 a measurement report RM including the results of these measurements.

As illustrated in figure 3, the system 100 comprises a second receiver M50 that (periodically) receives, during the step S4 of figure 4, from the first user equipment UE1 this measurement report MR.

Upon this measurement report MR, the processing unit M20 selects, during the step S5 of figure 4, the "best" second user equipment.

More precisely, in this exemplary embodiment, the processing unit M20 determines upon the measurement report MR which second user equipment would minimize the assumed energy and/or power to be consumed per first UE1 and/or second UE2-R and/or UE3-R user equipment(s).

Several second user equipments UE2-R and/or UE3-R could fulfil that criterion and be selected, for example if the first UE1 and/or second UE2-R and UE3-R user equipments would consume a quantity of power that is equal to or less than a predetermined consumption threshold.

The processing unit M20 also determines upon the measurement report MR which second user equipment UE2-R or UE3-R would minimize the distance (and consequently the channel propagation attenuation) between the first user equipment UE1 and the second user equipment UE2-R or UE3-R, or the distance (or the channel propagation attenuation) between the second user equipment UE2-R or UE3-R and the base station BS.

Alternatively, the processing unit M20 determines upon the measurement report MR which second user equipments UE2-R or UE3-R would maximize a global quality of service and for example which second user equipments UE2-R or UE3-R would maximize a harmonic mean of the distance between the first user equipment UE1 and the second user equipment UE2-R or UE3-R, and between the second user equipment UE2-R or UE3-R and the base station BS.

The harmonic mean can be calculated as follows:

$$harmonic\_mean = \frac{|d(UE1;UE_i R)|^2 * |d(BS;UE_i R)|^2}{|d(UE1;UE_i R)|^2 + |d(BS;UE_i R)|^2}$$

The same calculation can be performed by replacing the distances above with channel propagation attenuations.

The processing unit M20 can also determine upon the measurement report MR which second user equipments UE2-R or UE3-R would maximize the quality of service of the first UE1, and/or second UE2-R and/or UE3-R user equipments.

Several second user equipments UE2-R and UE3-R could fulfil this criterion and be retained, for example if the quality of service of the first UE1, and/or the quality of service of the second user equipments UE2-R and UE3-R is (or are) equal to or greater than a predetermined quality of service threshold.

Alternatively, one or several second user equipments UE2-R and UE3-R can be deleted from the list L if for example the quality of service of the second user equipment UE2-R or UE3-R is less than a predetermined quality of service threshold.

Thus, the processing unit M20 selects, during the step S5 of figure 4, the "best" second user equipment(s) that fulfils one of the different criteria above according to some predetermined parameters of selection.

As illustrated in figure 1, in this exemplary embodiment, the selected "best" second user equipment is UE2-R.

Then, the processing unit M20 establishes, during the step S6 of figure 4, a direct radiofrequency link between the first user equipment UE1 and the selected "best" second user equipment UE2-R so as to relay the transmission of data, referenced DT in figure 1, with the first user equipment UE1 through the selected "best" second user equipment UE2-R.

As mentioned above, the list L can also comprise other relaying means (not illustrated) than user equipments such as for example Relay Nodes (fixed or mobile), femtocells or WLANs. In this case, some measurements are also provided by these relaying means so that the processing unit M20 selects the "best" relaying equipment of the list L.

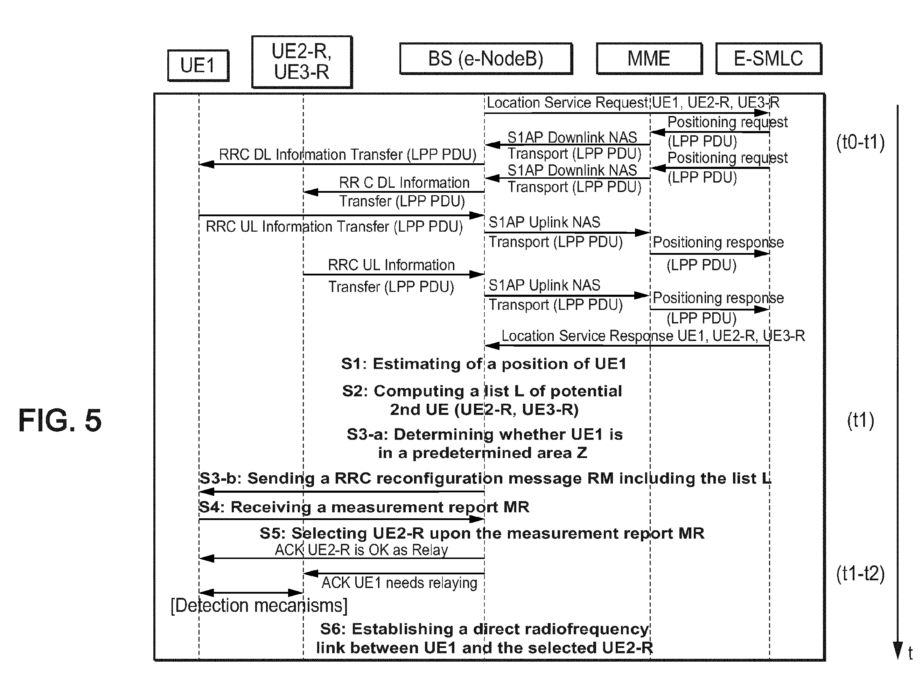

The steps of the present invention that have been described above can be implemented in a telecommunication network NW according to the 3GPP standard. As illustrated in figure 5, these different steps can be advantageously implemented within the 3GPP TS 36.305 that relates to the User Equipment positioning in an Evolved Universal Terrestrial Radio Access Network (E-UTRAN), and the 3GPP TS 36.300, without any deep modification of that framework.

Thus, thanks to all those mechanisms, the system 100 according to the present invention significantly improves the cell coverage when the first user equipment UE1 is in a connected mode, and is bound to enter into an out-of-coverage area Z.

This can be extended to an idle mode, but in this case, from time to time, the first user equipment UE1 has to send measurements necessary for localization purpose to the base station BS. Of course, the second user equipments UE2-R and UE3-R both have to be in a connected mode when they are in communication and/or in direct communication.

The present invention is particularly useful in the following situations:

First scenario: a first individual with a first user equipment UE1 drives on a highway (or is in a train) and another individual drives with a second user equipment having relaying means UE2-R in the same direction and with the same speed as the first individual (or is in the same train than the first individual in another wagon or outside the train, or vice versa). In such a case, the second user equipment UE2 can therefore serve as a relay for the first user equipment UE1 when for example the first individual is entering in a tunnel.

Second scenario: on a 2-layer road, when the individual with the second user equipment having relaying means UE2-R is better positioned than the first individual having a first user equipment UE1 because, for example, the position of the second user equipment involves better propagation characteristics.

Furthermore, the first user equipment UE1 can also have means for relaying itself a transmission in the telecommunication network. In such case, in one exemplary embodiment, the first user equipment UE1 can relay a transmission in the telecommunication network NW for a third user equipment for example between the third user equipment and a base station BS (or other user equipment(s)) so as to perform a transmission hopping in said telecommunication network NW. This can be useful for example in a public safety or emergency situation.

A person skilled in the art will readily appreciate that various parameters disclosed in the description (such as for example the measures of the measurement report MR, or the parameters for the selection) may be modified and that various embodiments disclosed may be combined without departing from the scope of the invention: the calculation of the speed or the direction or the position can be implemented in a different way, for example.

It is stipulated that the reference signs in the claims do not limit the scope of the claims, but are merely inserted to enhance the legibility of the claims.


**Claims**

1. A method for relaying in a telecommunication network (NW) a transmission (DT) between a base station (BS) and a first user equipment (UE1) through at least one second user equipment (UE2-R, UE3-R),
   the method being **characterized by** comprising the steps of:

- estimating (S1) a position ($P2_{(x2, y2)}$) of the first user equipment (UE1), and
- computing (S2), for the first user equipment (UE1) and on the basis of the estimated position ($P2_{(x2, y2)}$), a list (L) of at least one second user equipment having means (UE2-R, UE3-R) for relaying the transmission (DT) between the first user equipment (UE1) and the base station (BS).

2.  The method according to claim 1, further comprising a step of establishing (S6) a direct radiofrequency link between the first user equipment (UE1) and one second user equipment (UE2-R; UE3-R) of the list (L).

3.  The method according to claim 1 or 2, wherein the steps of estimating (S1) the position ($P2_{(x2, y2)}$) and computing (S2) the list (L) are periodically performed.

4.  The method according to claim 3, wherein the steps of estimating (S1) the position ($P2_{(x2, y2)}$) and computing (S2) the list (L) are periodically performed at a period depending on a speed (v) of the first user equipment (UE1).

5.  The method according to any one of claims 1 to 4, wherein the position ($P2_{(x2, y2)}$) of the first user equipment (UE1) is estimated for a predetermined time (t2) on the basis of at least two positions ($P0_{(x0, y0)}$, $P1_{(x1, y1)}$) of said first user equipment (UE1) at respective times (t0, t1), said respective times (t0, t1) being prior to said predetermined time (t2).

6.  The method according to any one of the preceding claims, wherein the position ($P2_{(x2, y2)}$) of the first user equipment (UE1) is estimated for a predetermined time (t2) on the basis of:

    - at least one position ($P0_{(x0, y0)}$, $P1_{(x1, y1)}$) of said first user equipment (UE1) at a time (t0, t1) prior to said predetermined time (t2),
    - a speed (v) of the first user equipment (UE1), and
    - a direction ($\alpha$) of the first user equipment (UE1).

7.  The method according to any one of the preceding claims, further comprising the steps of:

    - determining (S3a) whether the estimated position ($P2_{(x2, y2)}$) is in a predetermined area (Z), and
    - upon positive determination, sending (S3b) from the base station (BS) to the first user equipment (UE1) a reconfiguration message (RM) including the list (L).

8.  The method according to claim 7, wherein the step of determining (S3a) whether the estimated position ($P2_{(x2, y2)}$) of the first user equipment (UE1) is in the predetermined area (Z) comprises determining whether a distance between said estimated position ($P2_{(x2, y2)}$) and said predetermined area (Z) is equal to or less than a predetermined distance threshold.

9.  The method according to any one of claims 7 and 8, further comprising the steps of:

    - receiving (S4) at the base station (BS) and from the first user equipment (UE1) a measurement report (MR) related to each second user equipment (UE2-R, UE3-R) of the list (L), and
    - selecting (S5) one second user equipment (UE2-R, UE3-R) of the list (L) upon the measurement report (MR).

10. The method according to any one of the preceding claims, wherein computing (S2) the list (L) comprises determining at least one second user equipment (UE2-R, UE3-R) fulfilling at least one criterion based on:

    - an assumed energy and/or power to be consumed by first (UE1) and/or second (UE2-R, UE3-R) user equipments, and/or
    - a distance or channel propagation attenuation between the first user equipment (UE1) and the second user equipment (UE2-R, UE3-R), and/or between the second user equipment (UE2-R, UE3-R) and the base station (BS), and/or
    - a harmonic mean of a distance or channel propagation attenuation between the first user equipment (UE1) and the second user equipment (UE2-R, UE3-R), and between the second user equipment (UE2-R, UE3-R) and the base station (BS), and/or
    - a quality of service of the first (UE1) and/or second (UE2-R, UE3-R) user equipments.

11. The method according to any one of the preceding claims, wherein the list (L) further comprises dedicated information including a position of pilots in a time-frequency grid, frequency and time resources used by the second user equipment (UE2-R, UE3-R).

12. A computer program comprising code instructions implementing the method according to any one of the preceding claims when it is executed by a processor.

13. A system (100) for determining means for relaying a transmission (DT) in a telecommunication network (NW) between a base station (BS) and a first user equipment (UE1) and,
the system (100) comprising a processing unit (M20) arranged to :

- estimate a position ($P2_{(x2, y2)}$) of the first user equipment (UE1), and
- compute, for the first user equipment (UE1) and on the basis of the estimated position ($P2_{(x2, y2)}$), a list (L) of at least one second user equipment having means (UE2-R, UE3-R) for relaying the transmission (DT) between the first user equipment (UE1) and the base station (BS).

14. A base station (BS) of a telecommunication network (NW) comprising a system (100) according to claim 13.

15. A core network (CN) of a telecommunication network (NW) comprising a system (100) according to claim 13.

16. A first user equipment (UE1) comprising a system (100) according to claim 13.

# FIG. 1

FIG. 2

FIG. 3

**FIG. 4**

**FIG. 5**

| UE1 | UE2-R, UE3-R | BS (e-NodeB) | MME | E-SMLC |
|-----|--------------|--------------|-----|--------|

Location Service Request UE1, UE2-R, UE3-R

Positioning request (LPP PDU)

S1AP Downlink NAS Transport (LPP PDU)

RRC DL Information Transfer (LPP PDU)

Positioning request (LPP PDU)

S1AP Downlink NAS Transport (LPP PDU)

RR C DL Information Transfer (LPP PDU)

RRC UL Information Transfer (LPP PDU)

S1AP Uplink NAS Transport (LPP PDU)

Positioning response (LPP PDU)

RRC UL Information Transfer (LPP PDU)

S1AP Uplink NAS Transport (LPP PDU)

Positioning response (LPP PDU)

Location Service Response UE1, UE2-R, UE3-R

**S1: Estimating of a position of UE1**

**S2: Computing a list L of potential 2nd UE (UE2-R, UE3-R)**

**S3-a: Determining whether UE1 is in a predetermined area Z**

**S3-b: Sending a RRC reconfiguration message RM including the list L**

**S4: Receiving a measurement report MR**

**S5: Selecting UE2-R upon the measurement report MR**

ACK UE2-R is OK as Relay

ACK UE1 needs relaying

[Detection mecanisms]

**S6: Establishing a direct radiofrequency link between UE1 and the selected UE2-R**

(t0-t1)

(t1)

(t1-t2)

t

EP 2 706 815 A1

Europäisches
Patentamt

European
Patent Office

Office européen
des brevets

# EUROPEAN SEARCH REPORT

Application Number

EP 12 30 6082

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | US 2010/167743 A1 (PALANKI RAVI [US] ET AL) 1 July 2010 (2010-07-01)<br>* paragraph [0008] - paragraph [0009] *<br>* paragraph [0023] *<br>* paragraph [0026] - paragraph [0030] *<br>* paragraph [0033] - paragraph [0034] *<br>* paragraph [0037] *<br>* paragraph [0042] - paragraph [0043] *<br>* paragraph [0046] *<br>* paragraph [0048] *<br>* paragraph [0052] * | 1,2,7,<br>10,12-16<br>3-6,8,9<br>11 | INV.<br>H04W88/04 |
| X<br>Y<br>A | US 2005/190717 A1 (SHU LI [US] ET AL) 1 September 2005 (2005-09-01)<br>* paragraph [0011] - paragraph [0018] *<br>* paragraph [0028] - paragraph [0030] *<br>* paragraph [0034] *<br>* paragraph [0036] *<br>* paragraph [0042] * | 1,12-16<br>3-6<br>2,7-11 | |
| X<br>Y<br>A | EP 2 323 278 A1 (KYOCERA CORP [JP]) 18 May 2011 (2011-05-18)<br>* paragraph [0118] - paragraph [0125] * | 1,12-16<br>9<br>2-8,10,<br>11 | TECHNICAL FIELDS SEARCHED (IPC)<br><br>H04W |

-/--

The present search report has been drawn up for all claims

| Place of search | Date of completion of the search | Examiner |
|---|---|---|
| The Hague | 7 February 2013 | Orfanos, Georgios |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

Application Number

EP 12 30 6082

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/007085 A1 (FRANCE TELECOM [FR]; PAPADOGIANNIS AGISILAOS [FR]; HARDOUIN ERIC [FR];) 20 January 2011 (2011-01-20) | 1,2,7, 12-16 | |
| Y | * page 2, line 11 - page 3, line 11 * | 8 | |
| A | * page 4, line 30 - page 5, line 8 * | 3-6,9-11 | |
| | * page 7, line 9 - line 25 * | | |
| | * page 9, line 4 - line 7 * | | |
| | * page 11, line 9 - page 12, line 3 * | | |
| | * page 12, line 29 - page 15, line 18 * | | |
| | * page 17, line 9 - page 18, line 18 * | | |
| | * page 19, line 9 - line 27 * | | |
| | * page 25, line 26 - line 28 * | | |
| | * page 27, line 12 - line 18 * | | |
| | ----- | | |
| X | WO 99/46899 A2 (SWISSCOM AG [CH]; LOHER URS [CH]) 16 September 1999 (1999-09-16) | 1,12-16 | |
| A | * page 4, line 21 - page 5, line 4 * | 2-11 | |
| | ----- | | |
| X | US 7 254 400 B1 (SAKAKURA TAKASHI [JP]) 7 August 2007 (2007-08-07) | 1,12-16 | |
| A | * column 17, line 38 - column 18, line 16 * | 2-11 | TECHNICAL FIELDS SEARCHED (IPC) |

The present search report has been drawn up for all claims

| Place of search | Date of completion of the search | Examiner |
|---|---|---|
| The Hague | 7 February 2013 | Orfanos, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 12 30 6082

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2013

| Patent document cited in search report | | Publication date | Patent family member(s) | | Publication date |
|---|---|---|---|---|---|
| US 2010167743 | A1 | 01-07-2010 | TW 201108813 A<br>US 2010167743 A1<br>WO 2010078210 A1 | | 01-03-2011<br>01-07-2010<br>08-07-2010 |
| US 2005190717 | A1 | 01-09-2005 | NONE | | |
| EP 2323278 | A1 | 18-05-2011 | CN 102138288 A<br>EP 2323278 A1<br>US 2011188398 A1<br>WO 2010024288 A1 | | 27-07-2011<br>18-05-2011<br>04-08-2011<br>04-03-2010 |
| WO 2011007085 | A1 | 20-01-2011 | CN 102577586 A<br>EP 2454917 A1<br>US 2012250545 A1<br>WO 2011007085 A1 | | 11-07-2012<br>23-05-2012<br>04-10-2012<br>20-01-2011 |
| WO 9946899 | A2 | 16-09-1999 | AT 211594 T<br>AU 1234799 A<br>CA 2321918 A1<br>DE 69803411 D1<br>DE 69803411 T2<br>EP 1064760 A2<br>ES 2170535 T3<br>JP 2004513530 A<br>WO 9946899 A2 | | 15-01-2002<br>27-09-1999<br>16-09-1999<br>28-02-2002<br>01-08-2002<br>03-01-2001<br>01-08-2002<br>30-04-2004<br>16-09-1999 |
| US 7254400 | B1 | 07-08-2007 | JP 3515027 B2<br>JP 2001112043 A<br>US 7254400 B1 | | 05-04-2004<br>20-04-2001<br>07-08-2007 |

EPO FORM P0459

For more details about this annex : see Official Journal of the European Patent Office, No. 12/82